# EUROPEAN PATENT APPLICATION

(11) **EP 3 751 632 A1**
(43) Date of publication of application: **16.12.2020**
(21) Application number: 19180041.6
(22) Date of filing: 13.06.2019
(51) Int. Cl.: H01M 2/02, H01M 10/613, H01M 10/653, H01M 10/04

(54) **BATTERY MODULE AND METHOD FOR PRODUCING A BATTERY MODULE**

(71) Applicant: ABB Schweiz AG, 5400 Baden (CH)
(72) Inventor: Guggisberg, Beat, 5417 Untersiggenthal (CH); Schume, Matthias, 79787 Lauchringen (DE); Gilgen, Alexander, 5507 Mellingen (CH); Traub, Felix, 5413 Birmenstorf (CH); Andersson, Caroline, 8032 Zürich (CH)
(74) Representative: Qip Patentanwälte Dr. Kuehn & Partner mbB

(57) **Abstract**

A battery module (10) comprising at least one battery cell (20, 21, 22) with a top side (23) and a bottom side (24), wherein the bottom side (24) of the at least one battery cell (20, 21, 22) is opposite to the top side (23) of the at least one battery cell (20, 21, 22), a first cover (30, 31) for contacting the top side (23) of the at least one battery cell (20, 21, 22), and a cooler (80) for cooling the battery module (10), wherein the cooler (80) is positioned such that the cooler (80) is in thermal contact with the bottom side (24) of the at least one battery cell (20, 21, 22), is proposed, characterized in that the battery cell (20, 21, 22) is pressed between the first cover (30, 31) and the cooler (80), and characterized by a first elastic material (50) for compensating size tolerances of the at least one battery cell (20, 21, 22), wherein the first elastic material (50) is arranged between the bottom side (24) of the at least one battery cell (20, 21, 22) and the cooler (80), wherein the first elastic material (50) is adapted for electrical insulation between the at least one battery cell (20, 21, 22) and the cooler (80) and for thermal contact between the at least one battery cell (20, 21, 22) and the cooler (80).

## Description

### FIELD OF THE INVENTION

The invention relates to the field of batteries. In particular, the invention relates to a battery module and a method for producing a battery module.

### BACKGROUND OF THE INVENTION

Battery modules are increasingly used in transportation applications. Due to the high power and energy of the battery systems in such applications, it is necessary to connect individual battery cells in an intelligent manner in order to get the requested power rating out of the battery modules. One important thing to take into consideration for this is how the individual battery cells are physically placed in the housing or casing that is making up the battery module.

Different approaches e.g. with fixation to racks, gluing of the cells, plastic bag covers that are glued together, are available. The disadvantage of this is that when individual cells swell as they age the fixation and/or glue connection can break. Furthermore, it is important that the battery cells and the cooler are electrically isolated from each other while a thermal connection between the battery cells and a cooler has to be given.

In the state of the art the swelling of the individual cells as they age can be problematic. When placing the battery cells individually into the battery module, the thermal connection of each cell to the cooler has to be ensured. If the thermal connection between the battery cells and the cooler will get lost, the risk of overheating of the cells increases very much. Overheating can reduce the lifetime and reliability and in worst case, overheating can cause a fire.

Furthermore, the individual cells and/or the outer casing of the battery cell module can have different size due to tolerances. These tolerances can cause the battery cells to shift from its original position due to shock and/or vibration.

### DESCRIPTION OF THE INVENTION

It is an objective of the invention to provide a battery module and a method for producing a battery module, wherein the battery module allows for compensating size tolerances of a battery cell of the battery module and which ensures that the battery cell of the battery module is cooled.

This objective is achieved by the subject-matter of the independent claims. Further exemplary embodiments are evident from the dependent claims and the following description.

A first aspect of the invention relates to a battery module. The battery module comprises at least one battery cell with a top side and a bottom side, wherein the bottom side of the at least one battery cell is opposite to the top side of the at least one battery cell, a first cover for contacting the top side of the at least one battery cell, and a cooler for cooling the battery module, wherein the cooler is positioned such that the cooler is in thermal contact with the bottom side of the at least one battery cell. The battery cell is pressed between the first cover and the cooler, and the battery module comprises a first elastic material for compensating size tolerances of the at least one battery cell, wherein the first elastic material is arranged between the bottom side of the at least one battery cell and the cooler, wherein the first elastic material is adapted for electrical insulation between the at least one battery cell and the cooler and for thermal contact between the at least one battery cell and the cooler.

One advantage hereof is that a thermal connection between the at least one battery cell and the cooler is ensured even when the at least one battery cell has different sizes due to size tolerances and/or swells/expand, e.g., due to aging. Furthermore, the at least one battery cell is held in its position technically easily. Also, the electric insulation between the at least one battery cell and the cooler is achieved technically easily. In addition, vibrations and/or shock do not damage the at least one battery cell and do not cause a shift from its original position. One further advantage is that the battery module has a low weight. The first elastic material can be adapted for accommodating an expansion of the at least one battery cell.

A second aspect of the invention relates to a method for producing a battery module, in particular a battery module as described above. The method comprises the following steps: providing at least one battery cell with a top side and a bottom side, wherein the bottom side is opposite to the top side, a first cover for covering the top side of the at least one battery cell, a first elastic material for compensating size tolerances of the at least one battery cell, and a cooler for cooling the at least one battery cell, wherein the first elastic material is adapted for electrical insulation between the at least one battery cell and the cooler and for thermal contact between the at least one battery cell and the cooler; and arranging the at least one battery cell between the first cover and the cooler such that the at least one battery cell is pressed between the first cover and the cooler and such that the first elastic material is positioned between the cooler and the bottom side of the at least one battery cell for providing a thermal contact between the cooler and the at least one battery cell.

One advantage hereof is that a battery module can be produced wherein a thermal connection between the at least one battery cell of the battery module and the cooler for cooling the at least battery cell is assured, also in the case of different sizes of the at least one battery cell due to size tolerances and/or in the case of swelling and/or expanding of the battery cell, for example, due to aging. Also, the electric insulation between the at least one battery cell and the cooler is achieved technically easily in the produced battery module. In addition, with this method a battery module can be produced where the at least one battery cell is hold securely in its position technically easily. Furthermore, the at least one battery cell in the produced battery module is protected against shocks and/or vibrations, i.e., shocks and/or vibrations do not damage the at least one battery cell and do not cause a shift from its original position. The first elastic material can be adapted for accommodating an expansion of the at least one battery cell.

According to an embodiment of the battery module, the majority of the surface, in particular the whole surface, of the lateral sides of the at least one battery cell are separated from other battery cells of the battery module and/or an outer casing of the battery module.

One advantage hereof is that the at least battery cell has air gaps at the four lateral sides. Thus, the at least one battery cell is cooled on the four lateral sides. In addition, safety and reliability of the battery module is increased since there is free space in the lateral direction or lateral directions for swelling and/or movement of the at least one battery cell. Furthermore, if one battery cell becomes very warm or even catches fire, the heat is not spread to other battery cells. Also, tolerances of the battery cell in the lateral directions can be accommodated.

According to an embodiment of the battery module, the first cover is an intermediate cover which is in contact with a second cover, wherein the second cover is part of the outer casing of the battery module. One advantage hereof is that the different dimensions/lengths along the direction from the top side of the at least one battery cell to the bottom side of the at least one battery cell can be accommodated by different first covers. This means that battery cells with different lengths along the direction from the top side of the at least one battery cell to the bottom side of the at least one battery cell can be used in the battery module by using different first covers which have different thicknesses while the second cover/outer casing remains the same/unchanged. This increases the variability of the battery module and decreases the production costs.

According to an embodiment of the battery module, the first cover comprises stiffening elements for stiffening the cover and/or openings. By this, it is ensured that enough pressure is exerted on the at least one battery cell to hold the battery cell at its position. By this, it is ensured that the friction between the first elastic material and the at least one battery cell is high enough so that at least one battery cell stays at its position and does not move in a lateral direction.

According to an embodiment of the battery module, a second elastic material is arranged between the top side of the at least one battery and the first cover, wherein in particular the second elastic material is adapted for electrical insulation between the at least one battery cell, other battery cells and the outer casing of the battery cell module. One advantage hereof is that height tolerances and/or swelling of the at least one battery cell can be accommodated on both sides (top side and bottom side) of the at least one battery cell. This way, the at least one battery cell is protected even better against shock and/or vibration.

According to an embodiment of the battery module, the first cover comprises protrusions for holding the at least one battery at its position in one of the lateral directions or in both lateral directions, wherein the lateral directions are perpendicular to the direction from the bottom side of the at least one battery cell to the top side of the at least one battery cell. One advantage hereof is that the at least one battery cell is also held securely in a lateral direction or both lateral directions. Thus, the at least one battery cell is not only held by friction between the top side of the battery cell and the first cover and by friction between the bottoms side of the battery cell and the first elastic material in the lateral direction(s) but also by the protrusions of the first cover. This way, the at least one battery cell is held very firmly at its position.

According to an embodiment of the battery module, the second elastic material comprises at least two separated elastic elements, wherein the elastic elements are arranged symmetrically on the surface of the top side of the at least one battery. One advantage hereof is that the battery cell is held firmly at its position. Furthermore, forces are spread evenly over the top side of the battery cell. This protects the mechanical integrity of the battery cell.

According to an embodiment of the battery module, the battery module further comprises a grid, wherein the grid is arranged between the first elastic material and the bottom side of the at least one battery cell. By this, the bottom side of the at least one battery cell is cooled by air and by the cooler. This way, the at least one battery cell can be cooled more efficiently.

According to an embodiment of the method, the first elastic material comprises one continuous plate of elastic material, wherein the continuous plate is arranged such that the continuous plate covers essentially the whole bottom side of the at least one battery cell. By this, it is ensured that no electric contact between the at least one battery cell and the cooler can happen even when the at least one battery cell moves in the lateral direction(s) due to an external force and/or vibration.

According to an embodiment of the method, the first cover is an intermediate cover and wherein a second cover is arranged in contact with the first cover, wherein the second cover is part of an outer casing of the battery module. One advantage hereof is that battery cells with different lengths/dimensions from the bottom side of the battery cell to the top side of the battery cell can be used. The different heights can be accommodated by different first covers. This means that the different heights of the battery cells can be compensated by first covers with different thicknesses. The height of the outer casing of the battery module can be/stay the same independently of the thickness of the first cover. This reduces production costs.

According to an embodiment of the method, the method further comprises the step of arranging a second elastic material arranged between the top side of the at least one battery and the first cover, wherein in particular the second elastic material is adapted for electrical insulation between the at least one battery cell other battery cells and the outer casing of the battery cell module. One advantage hereof is that increases in height (e.g., due to swelling) and/or tolerances in height of the battery cell can be compensated by elastic material on both dies (bottom side and top side) of the battery cell. By this, the battery cell is protected better against shock and/or vibration. This increases the lifetime of the battery module.

According to an embodiment of the method, the method further comprises the step of arranging a grid between the first elastic material and the bottom side of the at least one battery cell. One advantage hereof is that the bottom side of the at least one battery cell is cooled both by air and by the cooler. Hence, the at least one battery cell can be cooled more efficiently.

According to an embodiment of the method, the method further comprises the following steps: providing an outer casing for the at least one battery; and arranging the at least one battery cell, the first cover and the first elastic material inside the outer casing such that the majority of the surface, in particular the whole surface, of the lateral sides of the at least one battery cell are separated from other battery cells of the battery module and/or an outer casing of the battery module. One advantage hereof is that the battery cell is cooled on the four lateral sides. Also, there is free space/volume for swelling and/or movement of the battery cell available in one lateral direction or both lateral direction. This increases the safety and reliability of the battery module. In addition, heat transfer from one battery cell to the adjacent battery cell and/or battery module is decreased. Furthermore, tolerances of the battery cell in one lateral direction or both lateral directions can be accommodated.

According to an embodiment of the method, the first cover comprises protrusions for holding the at least one battery at its position in one of the lateral directions or in both lateral directions, wherein the lateral directions are perpendicular to the direction from the bottom side of the at least one battery cell to the top side of the at least one battery cell. One advantage hereof is that the produced battery module is very robust against shock and/or vibrations. The battery cells of the produced battery module are held in their place also in a lateral direction or both lateral directions by the first cover in addition to the friction force between the first elastic material and the bottom side of the battery cell and the friction force between the top side of the battery cell and the first cover.

It has to be understood that features of the method as described in the above and in the following may be features of the system as described in the above and in the following.

These and other aspects of the invention will be apparent from and elucidated with reference to the embodiments described hereinafter.

### BRIEF DESCRIPTION OF THE DRAWINGS

The subject matter of the invention will be explained in more detail in the following text with reference to exemplary embodiments which are illustrated in the attached drawings.
- Fig. 1: schematically shows an exploded view of an embodiment of the battery module according to the invention;
- Fig. 2: schematically shows a perspective view of the grid of the battery module of Fig. 1;
- Fig. 3: schematically shows a perspective view of two first covers of the battery module of Fig. 1; and
- Fig. 4: schematically shows a sectional view of the battery module of Fig. 1.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

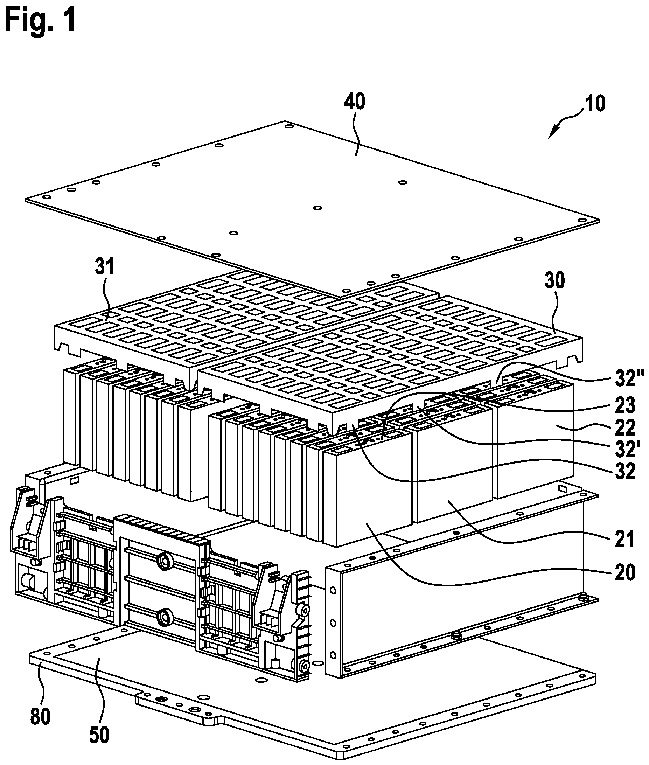

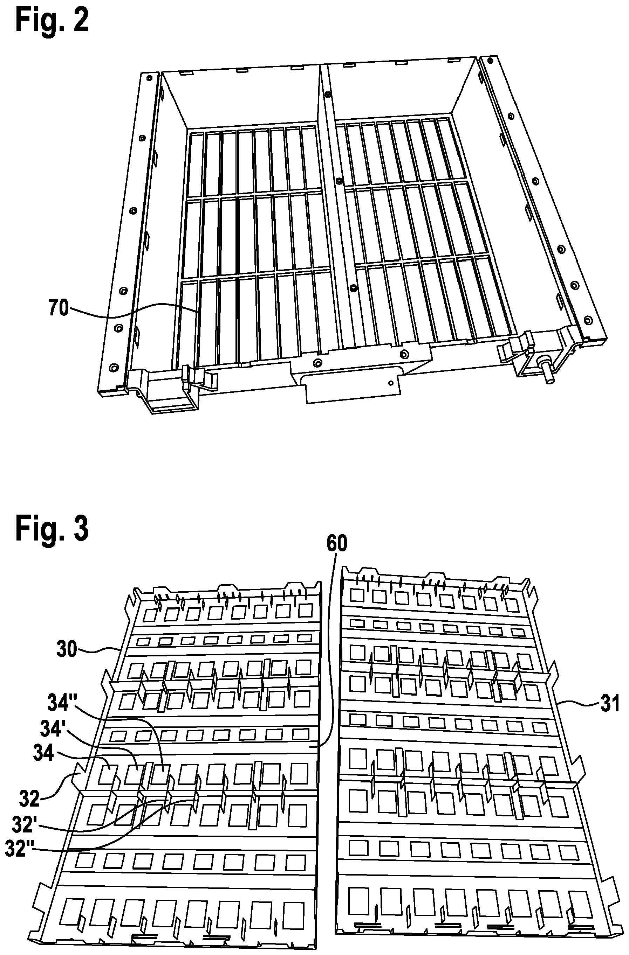

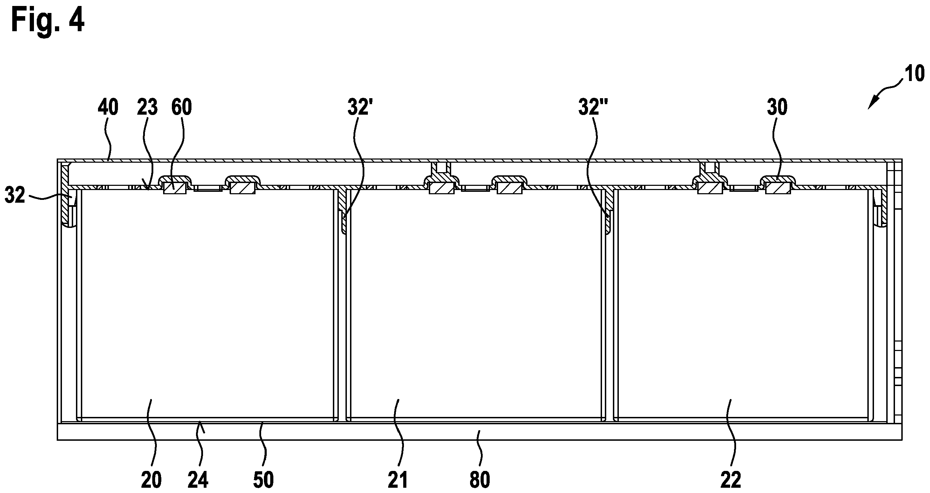

Fig.1 schematically shows an exploded view of an embodiment of the battery module 10 according to the invention. Fig. 2 schematically shows a perspective view of the grid 70 of the battery module 10 of Fig. 1. Fig. 3 schematically shows a perspective view of two first covers 30, 31 of the battery module 10 of Fig. 1. Fig. 4 schematically shows a sectional view of the battery module 10 of Fig. 1.

The battery module 10 typically comprises several battery cells 20, 21, 22. In the embodiment shown in the figures, the battery module 10 comprises 48 battery cells 20, 21, 22 in three rows. It is possible that the battery module 10 comprises only one battery cell 20,21,22.

The battery cells 20, 21, 22 have a box shape, regularly. Each battery cell 20, 21, 22 has a top side 23 and a bottom side 24. The bottom side 24 is opposite to the top side 23. In the figures, the top side 23 is the upper side of the battery cell 20, 21, 22. In the figures, the bottom side 24 is the lower side of the battery cell 20, 21, 22. The two poles of the battery cell 20, 21, 22 are arranged on the top side 23 of the battery cell 20, 21, 22, normally.

The battery system comprises a first cover 30, 31, also called intermediate cover, and a second cover 40, also called top cover. The first cover 30, 31 covers the top side 23 of the battery cell 20, 21, 22 at least partially. It is possible that the first cover 30, 31 covers essentially the whole top side 23 of the battery cell 20, 21, 22.

The first cover 30, 31 is made of an electrically insulating material. The first cover 30, 31 can compensate for different heights of the battery cell 20, 21, 22. This means that the first cover 30, 31 can have a thickness that depends on the height of the battery cell 20, 21, 22. The height runs from the bottom side 24 of the battery cell 20, 21, 22 to the top side 23 of the battery cell 20, 21, 22. The first cover 30, 31 can compensate for varying inner heights of the outer casing of the battery module 10. The battery module 10 can be provided with battery cells 20, 21, 22 of different heights. The first cover 30, 31 can be chosen such that the distance between the top side 23 of the battery cell 20, 21, 22 and the top cover is always the same. The first cover 30, 31 can be made of a hard plastic. It is also possible that the first cover 30, 31 has different thicknesses in different parts of the first cover 30, 31.

The second cover 40 /top cover is part of the outer casing of the battery module 10. The top cover is (at least partially) in direct/immediate contact with the first cover 30, 31/intermediate cover. The top cover can have on or more embossings on the outer side. The embossings are adapted for stiffening the form of the second cover 40/top cover.

The battery module 10 comprises a cooler 80. The cooler 80 is adapted for cooling the battery cells 20, 21, 22 and for transporting heat away from the battery cell 20, 21, 22 and battery module 10. By this, overheating of the battery cells 20, 21, 22 is prevented. The cooler 80 is in thermal contact with the bottom side 24 of the battery cell 20, 21, 22. The cooler 80 can use a liquid, e.g., water, for cooling the battery cell(s) 20, 21, 22.

A first elastic material 50, e.g., an elastomer, is arranged between the respective bottom sides 24 of the battery cells 20, 21, 22 and the cooler 80. The cooler 80 extends over the whole width of the battery module 10. The width of the battery module 10 runs from left to right in Fig. 4. The bottom sides 24 of the battery cell 20, 21, 22 are in contact with the first elastic material 50. In particular, the bottom sides 24 of the battery cell 20, 21, 22 can be in direct contact with the first elastic material 50.

The first elastic material 50 is an electrically insulating material. The first elastic material 50 has a high heat conduction coefficient. The heat conduction coefficient of the first elastic material 50 can be above ca. 0,15 W/mK, e.g., ca. 1,5 W/mK.

The first cover 30, 31 comprises bands/stripes of second elastic material 60. The second elastic material 60 can be made of the same material as the first elastic material 50. The bands or stripes run in parallel to each other. On the top side 23 of each battery cell 20, 21, 22, two bands of the second elastic material 60 are arranged. It is possible that only one band/stripe is arranged between the top side 23 of the battery cell 20, 21, 22 and the first cover 30, 31. The number of bands/stripe can also be larger than two.

The two bands/strips in Fig. 4 are arranged symmetrically to the center of the top side 23 of the battery cell 20, 21, 22. The second elastic material 60 is arranged between the first cover 30, 31 and the top side 23 of the battery cell 20, 21, 22. The bands or stripes of the second elastic material 60 can be glued to the first cover 30, 31. Other forms of linking the bands/stripes with the first cover 30, 31 are imaginable.

The battery cells 20, 21, 22 are pressed between the first cover 30, 31 and the cooler 80. This means that a force is exerted which holds the battery cells 20, 21, 22 by friction at their respective position. The battery cells 20, 21, 22 are held by friction, there are no mechanical fixations with the outer casing of the battery module 10, usually. Also, normally, there are no mechanical fixations between the bottom side 24 of the respective battery cell 20, 21, 22 and the first elastic material 50.

The created friction is present between the top side 23 of the battery cells 20, 21, 22 and the first cover 30, 31 and between the bottom sides 24 of the battery cells 20, 21, 22 and the first elastic material 50.

The exerted force can be adjusted by choosing the thickness/height of the first cover 30, 31. When the first cover 30, 31 has a larger thickness, the battery cell 20, 21, 22 is pressed against the first elastic material 50 and the cooler 80 with a larger force. When the first cover 30, 31 has a smaller thickness, the battery cell 20, 21, 22 is pressed against the first elastic material 50 and the cooler 80 with a smaller force.

Also, the force can be adjusted by choosing the elastic coefficient of the first elastic material 50. When the first elastic material 50 is softer, the exerted force and, thus, the friction is smaller. When the first elastic material 50 is harder, the exerted force and, thus, the friction is larger.

The battery cells 20, 21, 22 are protected against vibrations and/or shock of the battery module 10 by the way they are arranged in the battery module 10. Furthermore, the mechanical integrity of the battery cell 20, 21, 22 and the battery module 10 is ensured even when the battery cells 20, 21, 22 grow in size/expand.

The first elastic material 50 can be adapted to compensate height differences/height tolerances of the at least one battery cell 20, 21, 22 and/or of the outer casing of the battery cell module 10. Differences of height (e.g., ± 2% or ± 4%) of different battery cells 20, 21, 22 and/or of the size of the battery cell module 10 can thus be compensated.

Typically, when the battery cell 20, 21, 22 ages, the battery cell 20, 21, 22 grows in size/expands. The same can happen, when the battery cell 20, 21, 22 becomes warmer. This means that the battery cell 20, 21, 22 needs more space/volume as the battery cell 20, 21, 22 ages.

With the first elastic material 50 and the second elastic material 60 arranged at the bottom side 24 of the battery cell 20, 21, 22 and the top side 23 of the battery cell 20, 21, 22, respectively, the battery cell 20, 21, 22 can expand without increasing the exerted force on the battery cell 20, 21, 22 significantly. Also, the exerted force on the outer casing and the cooler 80 is only increased insignificantly. In particular, the force exerted on the first cover 30, 31, second cover 40 and the outer casing of the battery module 10 increases only slightly.

When the battery cell 20, 21, 22 expands in the direction from the top side 23 of the battery cell 20, 21, 22 to the bottom side 24 of the battery cell 20, 21, 22, the battery cell 20, 21, 22 presses with a stronger force against the first elastic material 50 and against the second elastic material 60. The elastic material is compressed by the force. The elastic material can be rather soft, so that the additional force exerted on the battery cell 20, 21, 22 when the battery cell 20, 21, 22 expands can be sustained by the battery cell 20, 21, 22 without problem.

When the battery cell 20, 21, 22 expands in one of the lateral directions, the gap between the battery cell 20, 21, 22 and the outer casing of the battery module 10 and/or between the battery cell 20, 21, 22 and the adjacent battery cell 20, 21, 22 becomes smaller, but, typically, no force is exerted by the battery cell 20, 21, 22 on the outer casing and/or the adjacent battery cell 20, 21, 22 in the lateral directions.

One lateral direction runs from left to right in Fig. 4. The other lateral direction runs into the paper plane of Fig. 4 and out of the paper plane of Fig. 4.

The battery cells 20, 21, 22 are arranged such that the four lateral side of the respective battery cells 20, 21, 22 are not in contact with the outer casing of the battery module 10 and not in contact with another battery cell 20, 21, 22. This way, heat generated by one battery cell 20, 21, 22 is not transferred to other battery cells 20, 21, 22 or to the outer casing of the battery module 10, but the battery cell 20, 21, 22 is cooled by air/gas.

When a thermal runway of a battery cell 20, 21, 22 happens or if one battery cell 20, 21, 22 catches fire, other battery cells 20, 21, 22 will be not affected by this very much.

The lateral sides are perpendicular to the bottom side 24 and perpendicular to the top side 23 of the respective battery cell 20, 21, 22, if the battery cell 20, 21, 22 has a box-like shape.

Also, more than 50%, in particular more than 90%, more particular more than 95%, e.g., 99%, of the surface of the lateral sides of the battery cell 20, 21, 22 are not in contact with other parts of the battery module 10.

The first cover 30, 31 has protrusions 32, 32', 32" extending from the first cover 30, 31 in the direction of the cooler 80. These protrusions 32, 32', 32" are adapted for holding the battery cell 20, 21, 22 in a lateral direction or both lateral directions. The lateral directions run perpendicularly to the direction from the top side 23 of the battery cell 20, 21, 22 to the bottom side 24 of the battery cell 20, 21, 22, respectively. Furthermore, the protrusions 32, 32', 32" can be adapted to hold the battery cell 20, 21, 22 distanced from the adjacent battery cell 20, 21, 22. Hence, there is an air gap between the battery cells 20, 21, 22, respectively. The protrusions 32, 32', 32" cover only a small part (e.g., less than 10%, in particular less than 5%, preferably less than 3%, of the surface of the lateral sides of the respective battery cell 20, 21, 22.

The first cover 30, 31 comprises openings 34, 34', 34" or gaps, i.e., parts where no material of the first cover 30, 31 is present. By this, the top sides 23 of the battery cells 20, 21, 22 are air-cooled, too. This means that there is an air gap between a portion of the top side 23 of the battery cell 20, 21, 22 and the second cover 40.

The cooler 80 uses a liquid for cooling the battery cells 20, 21, 22. Other techniques for cooling the cooler 80 and, thus, the battery cells 20, 21, 22 are possible.

The first elastic material 50 and/or the second elastic material 60 can comprise an elastomer. The first elastic material 50 can have the mechanical characteristics of a spring and/or cushion.

A grid 70 can be arranged between the bottom side 24 of the battery cell 20, 21, 22 and the cooler 80. The grid 70 does not hinder or prevent thermal contact between the bottom side 24 of the battery cell 20, 21, 22 and the second elastic material 60 and, thus, with the cooler 80.

The first cover 30, 31 comprises stiffening elements/bracing elements for stiffening the first cover 30, 31 and making the first cover 30, 31 more rigid. The strengthening elements/bracing elements can comprise protrusions 32, 32', 32" extending into the gap between the battery cells 20, 21, 22. The first cover 30, 31 can have ribs and/or domes.

The battery cells 20, 21, 22 of a battery module 10 can be connected in series.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 10: battery module
- 20, 21, 22: battery cell
- 23: top side of battery cell
- 24: bottom side of battery cell
- 30, 31: first cover
- 32, 32', 32": protrusion
- 34, 34', 34": opening
- 40: second cover
- 50: first elastic material
- 60: second elastic material
- 70: grid
- 80: cooler

## Claims

1. Battery module (10) comprising
at least one battery cell (20, 21, 22) with a top side (23) and a bottom side (24),
wherein the bottom side (24) of the at least one battery cell (20, 21, 22) is opposite to the top side (23) of the at least one battery cell (20, 21, 22),
a first cover (30, 31) for contacting the top side (23) of the at least one battery cell (20, 21, 22), and
a cooler (80) for cooling the battery module (10), wherein the cooler (80) is positioned such that the cooler (80) is in thermal contact with the bottom side (24) of the at least one battery cell (20, 21, 22),
**characterized in that**
the battery cell (20, 21, 22) is pressed between the first cover (30, 31) and the cooler (80),
and **characterized by**
a first elastic material (50) for compensating size tolerances of the at least one battery cell (20, 21, 22), wherein the first elastic material (50) is arranged between the bottom side (24) of the at least one battery cell (20, 21, 22) and the cooler (80), wherein the first elastic material (50) is adapted for electrical insulation between the at least one battery cell (20, 21, 22) and the cooler (80) and for thermal contact between the at least one battery cell (20, 21, 22) and the cooler (80).

2. Battery module (10) according to claim 1, wherein
the majority of the surface, in particular the whole surface, of the lateral sides of the at least one battery cell (20, 21, 22) are separated from other battery cells (20, 21, 22) of the battery module (10) and/or an outer casing of the battery module (10).

3. Battery module (10) according to claim 1 or 2, wherein
the first cover (30, 31) is an intermediate cover which is in contact with a second cover (40), wherein the second cover (40) is part of the outer casing of the battery module (10).

4. Battery module (10) according to one of the preceding claims, wherein
the first cover (30, 31) comprises stiffening elements for stiffening the cover and/or openings (34, 34', 34").

5. Battery module (10) according to one of the preceding claims, wherein
a second elastic material (60) is arranged between the top side (23) of the at least one battery and the first cover (30, 31), wherein in particular the second elastic material (60) is adapted for electrical insulation between the at least one battery cell (20, 21, 22), other battery cells and the outer casing of the battery cell module (10).

6. Battery module (10) according to one of the preceding claims, wherein
the first cover (30, 31) comprises protrusions (32, 32', 32") for holding the at least one battery at its position in one of the lateral directions or in both lateral directions, wherein the lateral directions are perpendicular to the direction from the bottom side (24) of the at least one battery cell (20, 21, 22) to the top side (23) of the at least one battery cell (20, 21, 22).

7. Battery module (10) according to one of the preceding claims, wherein
the second elastic material (60) comprises at least two separated elastic elements, wherein the elastic elements are arranged symmetrically on the surface of the top side (23) of the at least one battery.

8. Battery module (10) according to one of the preceding claims, further comprising a grid (70), wherein the grid (70) is arranged between the first elastic material (50) and the bottom side (24) of the at least one battery cell (20, 21, 22).

9. Method for producing a battery module (10), in particular a battery module (10) according to one of the preceding claims, wherein the method comprises the following steps:
providing
- at least one battery cell (20, 21, 22) with a top side (23) and a bottom side (24),
wherein the bottom side (24) is opposite to the top side (23),
- a first cover (30, 31) for covering the top side (23) of the at least one battery cell (20, 21,22),
- a first elastic material (50) for compensating size tolerances of the at least one battery cell (20, 21, 22),
and
- a cooler (80) for cooling the at least one battery cell (20, 21, 22),
wherein the first elastic material (50) is adapted for electrical insulation between the at least one battery cell (20, 21, 22) and the cooler (80) and for thermal contact between the at least one battery cell (20, 21, 22) and the cooler (80); and
arranging the at least one battery cell (20, 21, 22) between the first cover (30, 31) and the cooler (80) such that the at least one battery cell (20, 21, 22) is pressed between the first cover (30, 31) and the cooler (80)
and
such that the first elastic material (50) is positioned between the cooler (80) and the bottom side (24) of the at least one battery cell (20, 21, 22) for providing a thermal contact between the cooler (80) and the at least one battery cell (20, 21, 22).

10. Method according to claim 9, wherein
the first elastic material (50) comprises one continuous plate of elastic material, wherein the continuous plate is arranged such that the continuous plate covers essentially the whole bottom side (24) of the at least one battery cell (20, 21, 22).

11. Method according to claim 9 or 10, wherein
the first cover (30, 31) is an intermediate cover and wherein a second cover (40) is arranged in contact with the first cover (30, 31), wherein the second cover (40) is part of an outer casing of the battery module (10).

12. Method according to one of the claims 9-11,
further comprising the step of
arranging a second elastic material (60) arranged between the top side (23) of the at least one battery and the first cover (30, 31), wherein in particular the second elastic material (60) is adapted for electrical insulation between the at least one battery cell (20, 21, 22), other battery cells and the outer casing of the battery cell module (10).

13. Method according to one of the claims 9-12,
further comprising the step of
arranging a grid (70) between the first elastic material (50) and the bottom side (24) of the at least one battery cell (20, 21, 22).

14. Method according to one of the claims 9-13,
further comprising the following steps:
providing an outer casing for the at least one battery; and
arranging the at least one battery cell (20, 21, 22), the first cover (30, 31) and the first elastic material (50) inside the outer casing such that the majority of the surface, in particular the whole surface, of the lateral sides of the at least one battery cell (20, 21, 22) are separated from other battery cells (20, 21, 22) of the battery module (10) and/or an outer casing of the battery module (10).

15. Method according to one of the claims 9-14, wherein
the first cover (30, 31) comprises protrusions (32, 32', 32") for holding the at least one battery at its position in one of the lateral directions or in both lateral directions, wherein the lateral directions are perpendicular to the direction from the bottom side (24) of the at least one battery cell (20, 21, 22) to the top side (23) of the at least one battery cell (20, 21, 22).
